# EUROPEAN PATENT APPLICATION

(11) **EP 3 981 570 A1**
(43) Date of publication of application: **13.04.2022**
(21) Application number: 20200320.8
(22) Date of filing: 06.10.2020
(51) Int. Cl.: B29C 45/14, B29C 33/18, B05D 1/32

(54) **SYSTEM AND METHOD OF SHIELDING A PART FROM A COATING APPLICATION**

(71) Applicant: SABIC Global Technologies B.V., 4612 PX Bergen op Zoom (NL)
(72) Inventor: Milne, Craig, Lawrence, 6160 GA GELEEN (NL)
(74) Representative: Sabic Intellectual Property Group

(57) **Abstract**

A method is disclosed of shielding a part from a coating application, including: layering a stencil against a part first area so that a stencil vacuum side faces the part first area and a stencil coatable side faces away from the part first area, wherein the part first area defines a part first contour that is non-planar, and a stencil first area defines a stencil first contour that is non-planar and conforms with the part first area, whereby the stencil vacuum side is uniformly positioned adjacent to the part; fluidly communicating vacuum pressure between the stencil and the part via a first vacuum port formed in the stencil, thereby forming a vacuum seal between the stencil and the part; and applying a surface coating to the part so that the surface coating is received over a part coatable area of the part exposed by the stencil coatable side.

## Description

### BACKGROUND

The disclosed embodiments relate to the application of surface coatings and more specifically to a system and method of shielding a part from a coating application.

Sheets of polycarbonate may be formed with non-planar contours. Certain portions of the sheets may then need to be coated to provide for Ultraviolet (UV), chemical and abrasion resistance. Adhesive inks, paints and powder coating materials may be applied by air brushing. In the process of coating certain portions of the sheets, however, there may be a desire to prevent other portions of the sheets from being coated.

### SUMMARY OF THE DISCLOSED EMBODIMENTS

Disclosed, in various embodiments, is a system and method of shielding a part from a coating application.

For example, a method is disclosed of shielding a part from a coating application, comprising: layering a stencil against a part first area of a part so that a stencil vacuum side of the stencil faces the part first area and a stencil coatable side of the stencil faces away from the part first area, wherein the part first area defines a part first contour that is non-planar, and wherein a stencil first area of the stencil defines a stencil first contour that is non-planar and conforms with the part first area, whereby the stencil vacuum side is uniformly positioned adjacent to the part; fluidly communicating vacuum pressure between the stencil and the part via a first vacuum port formed in the stencil, wherein the first vacuum port is accessible from the stencil coatable side, thereby forming a vacuum seal between the stencil and the part; and applying a surface coating to the part so that the surface coating is received over a part coatable area of the part that is exposed by the stencil coatable side.

Further, for example, a system is disclosed for shielding a part from a coating application, the system comprising: a stencil configured to be layered against a part first area of the part so that a stencil vacuum side of the stencil faces the part first area and a stencil coatable side of the stencil faces away from the part first area, wherein the part first area defines a part first contour that is non-planar, wherein a stencil first area of the stencil defines a stencil first contour that is non-planar and conforms with the part first contour of the part first area, whereby the stencil vacuum side is configured to be uniformly positioned adjacent to the part; a first vacuum port formed in the stencil is configured to fluidly communicate vacuum pressure between the stencil and the part when the stencil is disposed against the part, wherein the first vacuum port is accessible from the stencil coatable side and configured form a vacuum seal between the stencil and the part.

These and other features and characteristics are more particularly described below.

### BRIEF DESCRIPTION OF THE DRAWINGS

The following is a brief description of the drawings wherein like elements are numbered alike and which is presented for the purposes of illustrating the exemplary embodiments disclosed herein and not for the purposes of limiting the same.
FIG. 1 shows a part that may receive a surface coating in accordance with the disclosed embodiments, where the part is an automobile window;
FIG. 2 shows a stencil that may be applied to the part to facilitate applying the surface coating in accordance with the disclosed embodiments;
FIG. 3 is a perspective view of a configuration of the stencil in accordance with the disclosed embodiments;
FIG. 4 shows the stencil being positioned against a part prior to applying the surface coating in accordance with the disclosed embodiments;
FIG. 5 is a flowchart showing a method of shielding a part from a coating application;
FIGS. 6A-6B respectively show side and perspective views of a stencil being placed against a part;
FIGS. 6C-6D respectively show side and perspective views of a stencil that is placed against a part; and
FIGS. 6E-6F respectively show side and perspective views of a part with a coating after a coating process is complete and the stencil is removed.

### DETAILED DESCRIPTION OF THE EMBODIMENTS

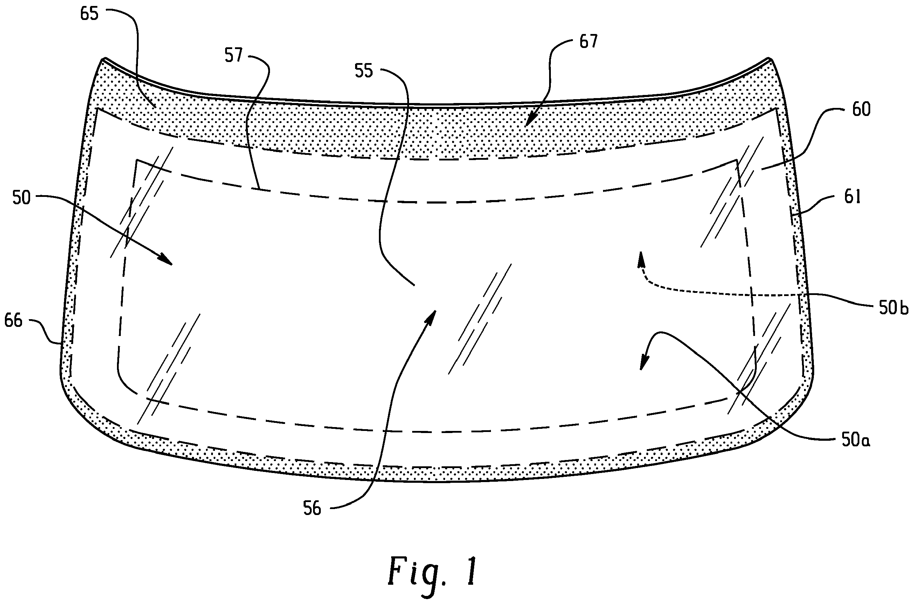

FIG. 1 shows a part 50 (or final part), which may be for example a tailgate window for an automobile or the like. The part 50 may have a part outer side 50a, which may face an outside of a vehicle. The part 50 may have a part inner side 50b, which may face an interior cabin of a vehicle. The part 50 may be formed as a polycarbonate sheet or panel.

The part 50 may be at least partially, or entirely, curved. For example, the part 50 may be curved so that the part outer side 50a is generally concave while the part inner side 50b is generally convex. In some embodiments, the part 50 may be formed with a part compound contour or profile. For example, the part 50 may have a part center area 55 (or part first area) that extends transversely outward from a part center 56 to a part center area boundary 57 (or part first boundary) shown in dashed lines. As referenced herein an area of the part 50 implies a surface area of the part 50. In addition, as used herein, the part 50 is formed as a curved sheet of material, and a transverse direction is along the sheet surface.

The part center area 55 may define a part center area contour (or part first contour) that is non-planar. The part may have a part transition area 60 (or part second area) extending transversely outward from the part center area boundary 57 to a part transition area boundary 61 (or part second boundary) shown in dashed lines. As shown, the part transition area 60 transversely surrounds the part center area 55. The part transition area 60 may define a part transition area contour (or part second contour) that is non-planar and differs from the part center contour. For example, the part transition area contour may be more progressive than the part center contour. The part 50 may have a part perimeter area 65 (or part coatable area) extending transversely outward from the part transition area boundary 61 to a part perimeter edge 66. As shown, the part perimeter area 65 transversely surrounds the part transition area 60. The identification of the boundaries and shapes are for purposes of facilitating a discussion of the embodiments and are not intended on limiting the disclosure.

There may be a desire to provide only the part perimeter area 65, e.g., the part coatable area, with a surface coating 67 (referred to as a coating for simplicity). Thus, there may also be a desire to shield the part center area 55 and part transition area 60 from accepting the coating. However, there may be a challenge in securing a polycarbonate coating shield to the part 50 over the part center area 55 and part transition area 60 being that these areas 55, 60 have differing non-planar contours.

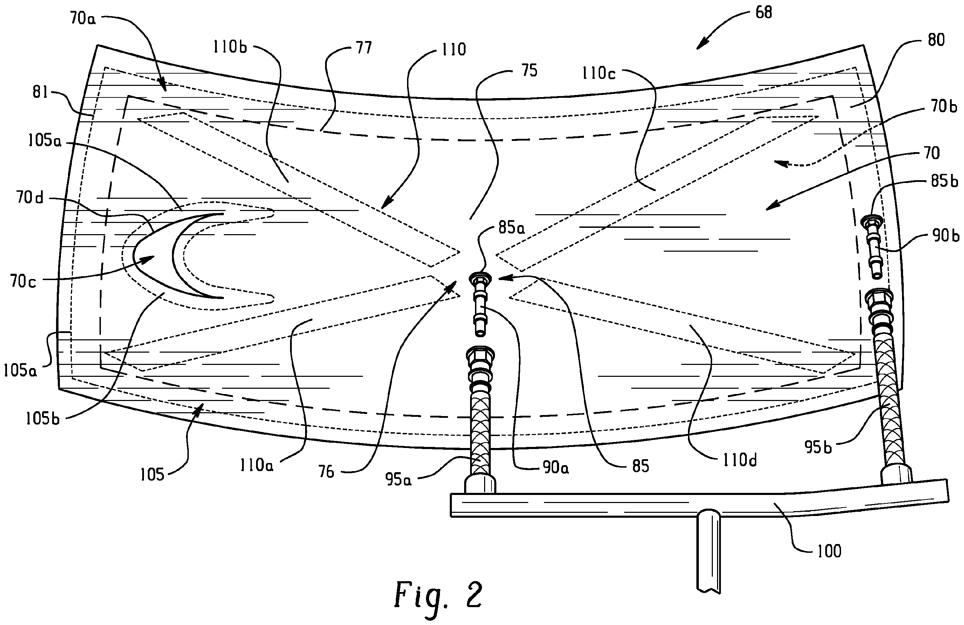

FIG. 2 shows a system 68 for shielding the part 50 from a coating application. More specifically, a stencil 70 that may be used to shield the part center area 55 and the part transition area 60 from being coated. The stencil 70 may be formed as a polycarbonate sheet or panel. The stencil 70 may have a stencil outer-side 70a (or coatable side) and a stencil underside 70b (or vacuum side). During a coating process, the stencil 70 may be placed, or draped over the part center area 55 and part transition area 60, to act as a coating shield. In operation, the stencil outer-side 70a is subject to the coating while the stencil underside 70b, positioned against the part 50, is shielded from the coating application. The stencil 70 may be positioned against the part outer side 50a or part inner side 50b, depending on the coating requirement. Thus, depending on the application, one of the stencil outer-side 70a and the stencil underside 70b is generally concave while another of the stencil outer-side 70a and the stencil underside 70b is generally convex.

As with the part 50, the stencil 70 may be formed with a stencil compound contour or profile that is shaped to conform with the shape of the part 50. That is, the stencil 70 may have contour that is complimentary, e.g., matches the shape of the part 50. More specifically, the stencil 70 may have a stencil center area 75 (or stencil first area) extending transversely outward from a stencil center 76 to a stencil center area boundary 77 (or stencil first boundary) shown in a dashed line. As referenced herein an area of the stencil 70 implies a surface area of the stencil 70. The stencil center area 75 may have a same size and shape as the window center area 55 and have a stencil center area contour (or stencil first contour) that is non-planar and is the same as the window center area contour. The stencil 70 may have a stencil perimeter area 80 (or stencil second area) extending transversely outward from the stencil center area boundary 77 to a stencil perimeter boundary 81 defining an outer edge. The stencil perimeter area 80 may have a same size and shape as the part transition area 60 and define a stencil perimeter area contour (or stencil second contour) that is non-planar and is the same as the part transition area contour. As shown, the stencil perimeter area 80 transversely surrounds the stencil center area 75.

The stencil compound contour may provide a shield to receiving the coating along the part center area 55 and part transition area 60. The part perimeter area 65 remains uncovered and may be coated. That is, the stencil 70 is configured to fit transversely within the part transition area boundary 61 to transversely expose the part perimeter area 65 that requires coating. As with the part 50, the stencil 70, with its compound contour, is one example and is described for illustrative purposes only.

The stencil 70 may be vacuum sealed against the part 50 to prevent relative movement during the coating operation. To accomplish this, one or more vacuum ports 85 may be formed or manufactured into the stencil 70 that are accessible from the stencil outer-side 70a. The vacuum ports 85 fluidly communicate vacuum pressure between the stencil 70 and the part 50 when the stencil 70 is disposed against the part 50. As shown the one or more vacuum ports 85 may include a first vacuum port 85a located in the stencil center area 75 and a second vacuum port 85b located in the stencil perimeter area 80. That is, the vacuum ports 85 may be distributed about the stencil 70 so that at least one of the vacuum ports 85 is located the different contour areas and/or so that the vacuum ports 85 are transversely spaced apart from each other. Having vacuum pressure ports respectively located in the plurality of contour areas in the stencil 70 helps evenly secure the stencil 70 to the part 50.

Each of the first and second vacuum ports 85a, 85b may respectively include or define first and second fittings 90a, 90b (collectively referred to as fittings 90) extending outwardly from the stencil outer-side 70a. As shown, the fittings 90a, 90b extend along or at an acute angle to a thickness direction of the stencil 70 at the location where each respectively connects with the stencil 70. The first and second fittings 90a, 90b are respectively configured, e.g., as connector tubes, for connecting to first and second conduits 95a, 95b. The first and second conduits 95a, 95b may be part of a manifold 100 configured to deliver vacuum pressure. This configuration provides a uniform vacuum pressure between the contour areas in the stencil 70 and the part 50.

To assist in sealing the stencil 70 to the part 50, a seal member 105 may be attached to the stencil underside 70b. The seal member 105 may be, as one example, an o-ring. The seal member 105 may be a foam seal tape. The foam seal tape is not particularly limited and can comprise at least one of a polyurethane, an ethylene propylene diene monomer rubber (EPDM), a silicone, or a polychloroprene (neoprene). The seal member 105 may extend about the stencil perimeter area 80, e.g., transversely between the stencil center area boundary 77 and the stencil perimeter boundary 81. With the utilization of the seal member 105, a vacuum seal is achieved between the stencil 70 and the part 50.

One or more gauge members 110 (or gauge blocks) may also be provided to the stencil underside 70b. The illustrated embodiment includes four gauge members 110a-110d distributed about the stencil underside 70b. The gauge members 110a-110d are distributed about the stencil center area 75, though this is not intended on limiting the disclosure. The gauge members 110 are configured for providing a predetermined amount of spacing between the stencil 70 and the part 50, to enable the vacuum pressure to be evenly distributed within a sealing boundary defined by the seal member 105. The gauge members 110 also prevent the part 50 and the stencil 70 from contacting and potentially scratching the part 50. It is to be appreciated that the seal member 105, distributed about the stencil 70, may be utilized in place of the gauge members 110, e.g., to provide for spacing between the stencil 70 and the part 50.

In one embodiment, within the stencil perimeter boundary 81, the stencil 70 may define a stencil aperture 70c formed by a stencil aperture edge 70d. The stencil aperture 70c may be transversely spaced apart from the vacuum port 85. To provide for the vacuum seal, the seal member 105 may include a seal member perimeter portion 105a and a seal member internal portion 105b. The seal member perimeter portion 105a and the seal member internal portion 105b may be transversely spaced apart from each other to allow for the vacuum pressure to be generated between the stencil 70 and the part 50. The seal member internal portion 105b may have a same shape and be slightly larger than the stencil aperture 70c, and may closely surround the stencil aperture 70c, to maximize the vacuum pressure between the stencil 70 and the part 50. In operation, the coating process may coat both the part perimeter area 65 and an area of the part 50 defined by the stencil aperture 70c.

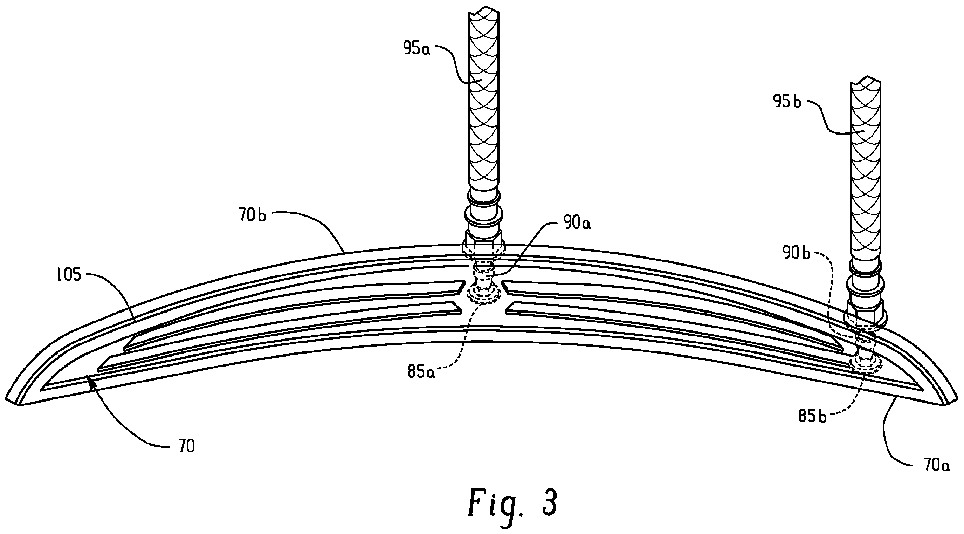

As indicated, the contour of the stencil outer-side 70a, which will be subject to receiving the coating, may be convex or concave, depending on a side of the part 50 that is being coated. FIG. 3 shows an example where the stencil outer-side 70a is convex, and the first and second fittings 90a, 90b respectively extend outwardly from the ports 85a, 85b. This configuration of the stencil 70 may be utilized for positioning the stencil 70 against the part inner side 50b, which may be convex and face an interior cabin of a vehicle. In this embodiment, the stencil underside 70b, against which the seal member 105 is connected, is concave.

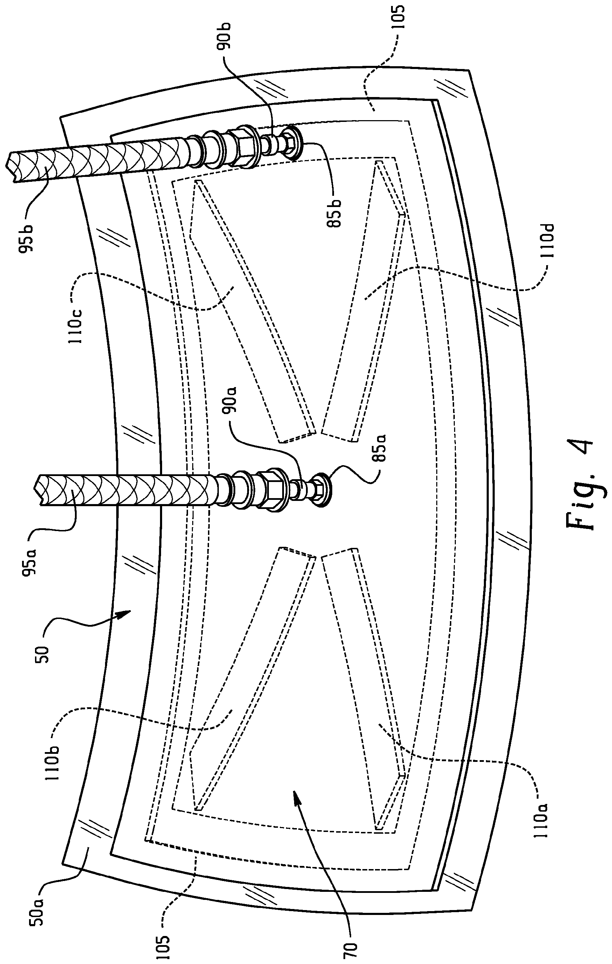

FIG. 4 shows mounting of the stencil 70 shown in FIG. 3 to the part outer side 50a, though as indicated the stencil 70 could be configured for placement against the part inner side 50b. The stencil 70 may be lifted and moved via the conduits 95a, 95b respectively connected to the fittings 90a, 90b of the ports 85a, 85b. Also shown in FIG. 4 is the seal member 105 and the gauge members 110a-110d. Once positioned against the part 50, vacuum pressure may be applied to vacuum seal the stencil 70 in place.

Thus, as indicated, the part 50 may be a sheet of material formed so that at least it is not planar. With this configuration the stencil 70 may be draped over, e.g., placed against, the part 50 so that the stencil 70 is uniformly positioned adjacent to the part 50.

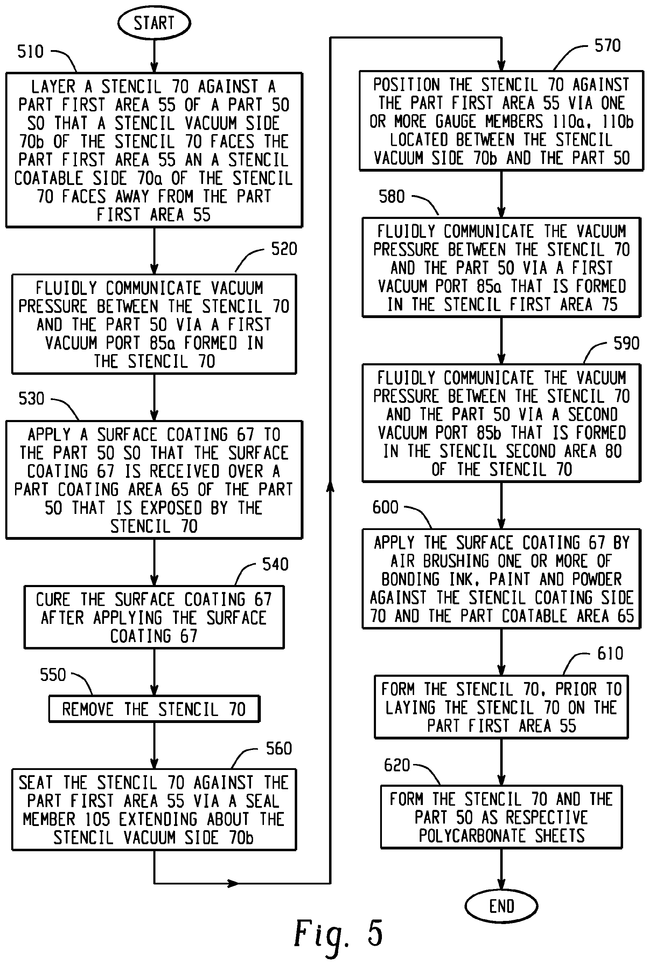

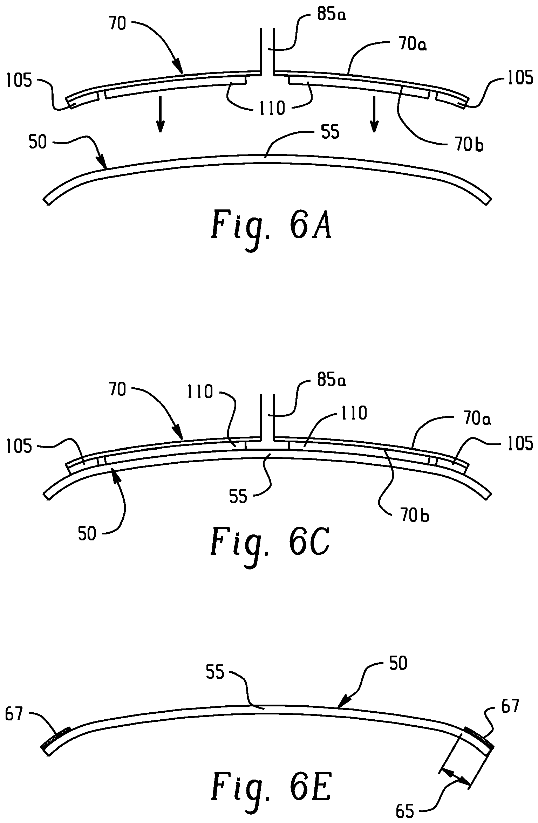

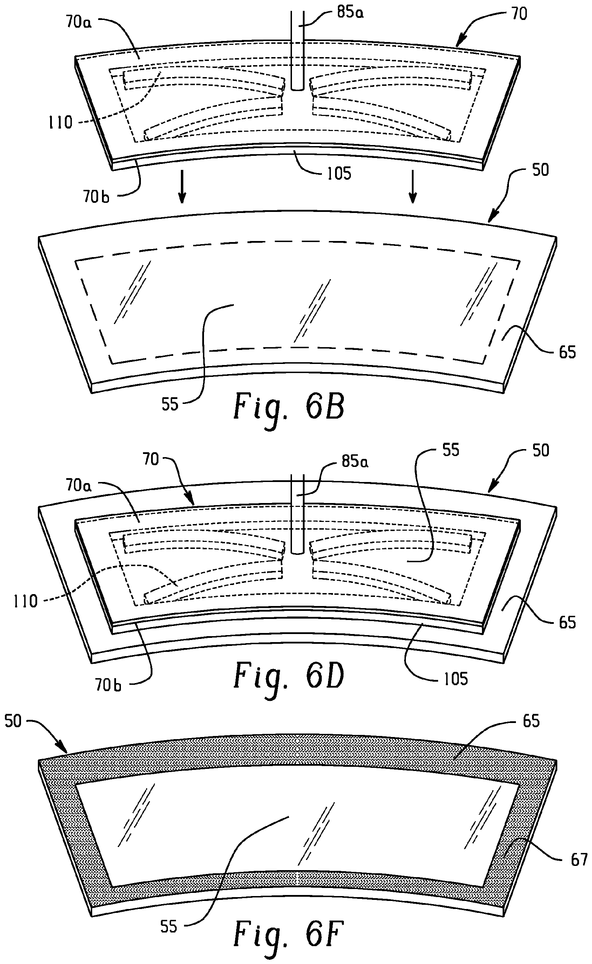

Turning to FIGS. 5 and 6A-6F, a flowchart and accompanying illustrations show a method of shielding a part 50 from a coating application. As shown in block 510 and in more detail in FIGS. 6A-6D, the method includes layering a stencil 70 against a part first area 55 of a part 50 so that a stencil vacuum side 70b of the stencil 70 faces the part first area 55 and a stencil coatable side 70a of the stencil 70 faces away from the part first area 55. As indicated, the part first area 55 defines a part first contour that is non-planar. As further indicated, a stencil first area 75 of the stencil 70 defines a stencil first contour that is non-planar and conforms with the part first area 55. From this configuration, the stencil vacuum side 70b is uniformly positioned adjacent to the part 50.

As shown in block 520, while in the configuration shown in FIGS. 6C-6D, the method includes fluidly communicating vacuum pressure between the stencil 70 and the part 50 via a first vacuum port 85a formed in the stencil 70. The first vacuum port 85a is accessible from the stencil coatable side 70a. This configuration forms a vacuum seal between the stencil 70 and the part 50.

As shown in block 530, while in the configuration shown in FIGS. 6C-6D, the method includes applying a surface coating 67 to the part 50 so that the surface coating 67 is received over a part coatable area 65 of the part 50 that exposed by the stencil coatable side 70.

As shown in block 540, the method includes curing the surface coating 67 after applying the surface coating 67. As shown in block 550 and FIGS. 6E-6F, the method includes removing the stencil 70. From this configuration, the surface coating 67 covers the part coatable area 65, and the part first area 55 is free of the surface coating 67.

The above blocks 510-550 identify various aspects of the method of the disclosed embodiments. Additional aspects of the embodiments are now identified, with continued reference to FIGS. 5 and 6A-6F. These additional aspects are neither intended on limiting the scope of the embodiments and nor intended to imply a particular sequence of performance unless expressly indicated.

As shown in block 560 and FIGS. 6A-6D, though in more detail in FIGS. 6A and 6C, the method includes seating the stencil 70 against the part first area 55 via a seal member 105 extending about the stencil vacuum side 70b. As shown in block 570, the method includes positioning the stencil 70 against the part first area 55 via one or more gauge members 110a, 110b located between the stencil vacuum side 70b and the part 50. As shown in block 580, the method includes fluidly communicating the vacuum pressure between the stencil 70 and the part 50 via a first vacuum port 85a that is formed in the stencil first area 75.

As shown in block 590, the method includes fluidly communicating the vacuum pressure between the stencil 70 and the part 50 via a second vacuum port 85b formed in a stencil second area 80 of the stencil 70. As indicated, the stencil second area 80 defines a stencil second contour that is non-planar and conforms with a part second area 60 of the part 50 that is non-planar. As indicated, the stencil first contour and stencil second contour differ from each other.

As shown in block 600, the method includes applying the surface coating 67 by air brushing one or more of bonding ink, paint and powder against the stencil coatable side 70a and the part coatable area 65. With regard to a powder coating application, the part 50 may be positively charged while a powder spraying apparatus may be negatively charged to attract powder to the part. As shown in block 610, the method includes forming the stencil 70, prior to laying the stencil 70 on the part first area 55, so that the stencil first area 75 defines the stencil first contour that is non-planar and conforms with the part first contour of the part first area 55. As shown in block 620, the method includes forming the stencil 70 and the part 50 as respective polycarbonate sheets.

The part and/or stencil, or a combination thereof, can comprise a polymeric material. The polymeric material is chosen based upon the desired part properties, such as transparency and thermal stability. Examples of polymeric materials include, but are not limited to, polyesters, polycarbonates, polystyrenes (e.g., copolymers of polycarbonate and styrene, polyphenylene ether-polystyrene blends), polyimides (e.g., polyetherimides), acrylonitrile-styrene-butadiene (ABS), polyarylates, polyalkylmethacrylates (e.g., polymethylmethacrylates (PMMA)), polyolefins (e.g., polypropylenes (PP) and polyethylenes, high density polyethylenes (HDPE), low density polyethylenes (LDPE), linear low density polyethylenes (LLDPE)), polyamides (e.g., polyamideimides), polyarylates, polysulfones (e.g., polyarylsulfones, polysulfonamides), polyphenylene sulfides, polytetrafluoroethylenes, polyethers (e.g., polyether ketones (PEK), polyether etherketones (PEEK), polyethersulfones (PES)), polyacrylics, polyacetals, polybenzoxazoles (e.g., polybenzothiazinophenothiazines, polybenzothiazoles), polyoxadiazoles, polypyrazinoquinoxalines, polypyromellitimides, polyquinoxalines, polybenzimidazoles, polyoxindoles, polyoxoisoindolines (e.g., polydioxoisoindolines), polytriazines, polypyridazines, polypiperazines, polypyridines, polypiperidines, polytriazoles, polypyrazoles, polypyrrolidones, polycarboranes, polyoxabicyclononanes, polydibenzofurans, polyphthalamide, polyacetals, polyanhydrides, polyvinyls (e.g., polyvinyl ethers, polyvinyl thioethers, polyvinyl alcohols, polyvinyl ketones, polyvinyl halides, polyvinyl nitriles, polyvinyl esters, polyvinylchlorides), polysulfonates, polysulfides, polyureas, polyphosphazenes, polysilazanes, polysiloxanes, fluoropolymers (e.g., polyvinyl fluoride (PVF), polyvinylidene fluoride (PVDF), polyvinyl fluoride (PVF), fluorinated ethylene-propylene (FEP), polyethylene tetrafluoroethylene (ETFE)), polycarbonate-siloxane block copolymer (such as LEXAN^{™} EXL Resin), terephthalate ester of resorcinol (ITR) (such as LEXAN^{™} SLX Resin), N-phenylphenol phthaleinylbisphenol (PPP-BP) (such as LEXAN^{™} XHT Resin), or a combination comprising at least one of the foregoing.

The part and/or stencil, or a combination thereof, can comprise a polymeric material. The thermoplastic polymer can also comprise a polyester. Polyesters include those derived from an aliphatic, cycloaliphatic, or aromatic diol, or mixtures thereof, containing from 2 to about 10 carbon atoms and an aliphatic, cycloaliphatic, or aromatic dicarboxylic acid, and have repeating units of the following general formula:

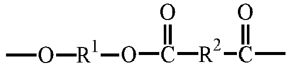

wherein n is an integer of from 2 to 6, and R¹ and R² are each independently a divalent C₁-C₂₀ aliphatic radical, a C₂-C₁₂ cycloaliphatic alkyl radical, or a C₆-C₂₄ aromatic radical. The polyesters can be formed from terephthalic acid and a combination of ethylene glycol and cyclohexadimethanol, for example, formed from terephthalic acid and a combination of ethylene glycol, diethylene glycol and cyclohexadimethanol. Examples of polyesters include at least one of poly(ethylene terephthalate), spiroglycol modified polyethylene terephthalate, polycyclohexylenedimethylene terephthalate glycol, poly(1,4-cyclohexylenedimethylene 1,4-cyclohexanedicarboxylate), and polyethyelene naphthalate, poly-cyclohexylenedimethylene-terephthalate-glycol, polycyclohexylenedimethylene terephthalate, or polyethylene terephthalate with diethylene glycol. The polyester can comprises poly(ethylene terephthalate) ("PET"), e.g., unmodified PET. The polyester can comprise spiroglycol modified amorphous PET.

The part and/or stencil, or a combination thereof, can comprise a single layer, e.g., a monolithic sheet. Optionally, the part and/or stencil, or a combination thereof, can be formed of a plurality of layers. For example, the thermoplastic polymer can comprise a plurality of layers greater than or equal to 4 layers, for instance, greater than or equal to 32 layers, greater than or equal to 67 layers. The total number of layers can be 8 to 512 layers, or 32 to 128 layers. The plurality of layers of the thermoplastic polymer can include less than or equal to 512 layers, or less than or equal to 256 layers, for example, less than or equal to 128 layers.

The part and/or stencil, or a combination thereof, can comprise a thermoplastic sheet which is co-extruded, coated, laminated, or a combination comprising at least one of the foregoing. For example, the part and/or stencil, or a combination thereof, can comprise a polycarbonate core with a co-extruded PMMA layer, a polycarbonate sheet with a silica hard coat, a polycarbonate laminated with a transparent film such as polyvinylidene fluoride (PVDF), other transparent polymer films, or a combination comprising at least one of the foregoing.

The system disclosed herein include(s) at least one of the following aspects:
Aspect 1: A method of shielding a part from a coating application, comprising: layering a stencil 70 against a part first area 55 of a part 50 so that a stencil vacuum side 70b of the stencil 70 faces the part first area 55 and a stencil coatable side 70a of the stencil 70 faces away from the part first area 55, wherein the part first area 55 defines a part first contour that is non-planar, and wherein a stencil first area 75 of the stencil 70 defines a stencil first contour that is non-planar and conforms with the part first area 55, whereby the stencil vacuum side 70b is uniformly positioned adjacent to the part 50; fluidly communicating vacuum pressure between the stencil 70 and the part 50 via a first vacuum port 85a formed in the stencil 70, wherein the first vacuum port 85a is accessible from the stencil coatable side 70a, thereby forming a vacuum seal between the stencil 70 and the part 50; and applying a surface coating 67 to the part 50 so that the surface coating 67 is received over a part coatable area 65 of the part 50 that is exposed by the stencil coatable side 70a
Aspect 2: The method of aspect 1, comprising: curing the surface coating 67 after applying the surface coating 67.
Aspect 3: The method of aspects 1 or 2, comprising: removing the stencil 70, whereby the surface coating 67 covers the part coatable area 65, and the part first area 55 is free of the surface coating 67.
Aspect 4: The method of any of aspects 1 to 3, comprising: seating the stencil 70 against the part first area 55 via a seal member 105 extending about the stencil vacuum side 70b.
Aspect 5: The method of any of aspects 1 to 4, comprising: positioning the stencil 70 against the part first area 55 via one or more gauge members 110a, 110b located between the stencil vacuum side 70b and the part 50.
Aspect 6: The method of any of aspects 1 to 5, comprising: fluidly communicating the vacuum pressure between the stencil 70 and the part 50 via the first vacuum port 85a that is formed in the stencil first area 75; and fluidly communicating the vacuum pressure between the stencil 70 and the part 50 via a second vacuum port 85b formed in a stencil second area 80 of the stencil 70, wherein the stencil second area 80 defines a stencil second contour that is non-planar and conforms with a part second area 60 of the part 50, wherein the part second area 60 defines part second contour that is non-planar, and wherein the stencil first contour and the stencil second contour differ from each other.
Aspect 7: The method of any one of aspects 1 to 6, comprising: applying the surface coating 67 by air brushing one or more of bonding ink, paint and powder against the stencil coatable side 70a and the part coatable area 65.
Aspect 8: The method of any of aspects 1 to 7, comprising: forming the stencil 70, prior to laying the stencil 70 on the part first area 55, so that the stencil first area 75 defines the stencil first contour that is non-planar and conforms with the part first contour of the part first area 55.
Aspect 9: The method of any of aspects 1 to 8, comprising: forming the stencil 70 and the part 50 as respective polycarbonate sheets.
Aspect 10: A system for shielding a part from a coating application, the system comprising: a stencil 70 configured to be layered against a part first area 55 of the part 50 so that a stencil vacuum side 70b of the stencil 70 faces the part first area 55 and a stencil coatable side 70a of the stencil 70 faces away from the part first area 55, wherein the part first area 55 defines a part first contour that is non-planar, wherein a stencil first area 75 of the stencil 70 defines a stencil first contour that is non-planar and conforms with the part first contour of the part first area 55, whereby the stencil vacuum side 70b is configured to be uniformly positioned adjacent to the part 50; a first vacuum port 85a formed in the stencil 70 is configured to fluidly communicate vacuum pressure between the stencil 70 and the part 50 when the stencil 70 is disposed against the part 50, wherein the first vacuum port 85a is accessible from the stencil coatable side 70a and configured form a vacuum seal between the stencil 70 and the part 50.
Aspect 11: The system of aspect 10, wherein: the first vacuum port 85a is formed in the stencil first area 75; and a second vacuum port 220 is formed in a stencil second area 80 of the stencil 70, wherein the stencil second area 80 defines a stencil second contour that is non-planar and conforms with a part second area 60 of the part 50 that is non-planar, and wherein the stencil first contour and stencil second contour differ from each other.
Aspect 12: The system of aspects 10 or 11, comprising: a seal member 105 extending about the stencil vacuum side 70b.
Aspect 13: The system of any of aspects 10 to 12, comprising: one or more gauge members 110a, 110b located against the stencil vacuum side 70b and configured for positioning the stencil 70 against the part first area 55.
Aspect 14: The system of any of aspects 10 to 13, wherein the stencil 70 and the part 50 are respective polycarbonate sheets.
Aspect 15: The system of any of aspects 10 to 14, wherein the stencil 70 defines a stencil aperture 70c formed by a stencil aperture edge 70d, wherein the stencil aperture 70c is spaced apart from the vacuum port 85; and the seal member 105 defines a seal member perimeter portion 105a positioned about a stencil perimeter boundary 81 and a seal member internal portion 105b positioned about the stencil aperture 70c.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention. The endpoints of all ranges directed to the same component or property are inclusive and independently combinable (e.g., ranges of "less than or equal to 25 wt%, or 5 wt% to 20 wt%," is inclusive of the endpoints and all intermediate values of the ranges of "5 wt% to 25 wt%," etc.). Disclosure of a narrower range or more specific group in addition to a broader range is not a disclaimer of the broader range or larger group. "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. "Or" means "and/or." The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

The modifier "about" used in connection with a quantity is inclusive of the stated value and has the meaning dictated by the context (e.g., includes the degree of error associated with measurement of the particular quantity). The notation "+ 10%" means that the indicated measurement can be from an amount that is minus 10% to an amount that is plus 10% of the stated value. The terms "front", "back", "bottom", and/or "top" are used herein, unless otherwise noted, merely for convenience of description, and are not limited to any one position or spatial orientation. "Optional" or "optionally" means that the subsequently described event or circumstance can or cannot occur, and that the description includes instances where the event occurs and instances where it does not. Unless defined otherwise, technical and scientific terms used herein have the same meaning as is commonly understood by one of skill in the art to which this invention belongs. A "combination" is inclusive of blends, mixtures, alloys, reaction products, and the like.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A method of shielding a part from a coating application, comprising:
layering a stencil 70 against a part first area 55 of the part 50 so that a stencil vacuum side 70b of the stencil 70 faces the part first area 55 and a stencil coatable side 70a of the stencil 70 faces away from the part first area 55,
wherein the part first area 55 defines a part first contour that is non-planar, and wherein a stencil first area 75 of the stencil 70 defines a stencil first contour that is non-planar and conforms with the part first area 55, whereby the stencil vacuum side 70b is uniformly positioned adjacent to the part 50;
fluidly communicating vacuum pressure between the stencil 70 and the part 50 via a first vacuum port 85a formed in the stencil 70, wherein the first vacuum port 85a is accessible from the stencil coatable side 70a, thereby forming a vacuum seal between the stencil 70 and the part 50; and
applying a surface coating 67 to the part 50 so that the surface coating 67 is received over a part coatable area 65 of the part 50 that is exposed by the stencil coatable side 70a.

2. The method of claim 1, comprising:
curing the surface coating 67 after applying the surface coating 67.

3. The method of claims 1 or 2, comprising:
removing the stencil 70,
whereby the surface coating 67 covers the part coatable area 65, and the part first area 55 is free of the surface coating 67.

4. The method of any of claims 1 to 3, comprising:
seating the stencil 70 against the part first area 55 via a seal member 105 extending about the stencil vacuum side 70b.

5. The method of any of claims 1 to 4, comprising:
positioning the stencil 70 against the part first area 55 via one or more gauge members 110a, 110b located between the stencil vacuum side 70b and the part 50.

6. The method of any of claims 1 to 5, comprising:
fluidly communicating the vacuum pressure between the stencil 70 and the part 50 via the first vacuum port 85a that is formed in the stencil first area 75; and
fluidly communicating the vacuum pressure between the stencil 70 and the part 50 via a second vacuum port 85b formed in a stencil second area 80 of the stencil 70,
wherein the stencil second area 80 defines a stencil second contour that is non-planar and conforms with a part second area 60 of the part 50, wherein the part second area 60 defines a part second contour that is non-planar, and
wherein the stencil first contour and the stencil second contour differ from each other.

7. The method of any one of claims 1 to 6, comprising:
applying the surface coating 67 by air brushing one or more of bonding ink, paint and powder against the stencil coatable side 70a and the part coatable area 65.

8. The method of any of claims 1 to 7, comprising:
forming the stencil 70, prior to laying the stencil 70 on the part first area 55,
so that the stencil first area 75 defines the stencil first contour that is non-planar and conforms with the part first contour of the part first area 55.

9. The method of any of claims 1 to 8, comprising:
forming the stencil 70 and the part 50 as respective polycarbonate sheets.

10. A system for shielding a part from a coating application, the system comprising:
a stencil 70 configured to be layered against a part first area 55 of the part 50 so that a stencil vacuum side 70b of the stencil 70 faces the part first area 55 and a stencil coatable side 70a of the stencil 70 faces away from the part first area 55, wherein the part first area 55 defines a part first contour that is non-planar,
wherein a stencil first area 75 of the stencil 70 defines a stencil first contour that is non-planar and conforms with the part first contour of the part first area 55, whereby the stencil vacuum side 70b is configured to be uniformly positioned adjacent to the part 50; and
a first vacuum port 85a formed in the stencil 70 is configured to fluidly communicate vacuum pressure between the stencil 70 and the part 50 when the stencil 70 is disposed against the part 50, wherein the first vacuum port 85a is accessible from the stencil coatable side 70a and configured form a vacuum seal between the stencil 70 and the part 50.

11. The system of claim 10, wherein:
the first vacuum port 85a is formed in the stencil first area 75; and
a second vacuum port 220 is formed in a stencil second area 80 of the stencil 70,
wherein the stencil second area 80 defines a stencil second contour that is non-planar and conforms with a part second area 60 of the part 50 that is non-planar, and
wherein the stencil first contour and stencil second contour differ from each other.

12. The system of claims 10 or 11, comprising:
a seal member 105 extending about the stencil vacuum side 70b.

13. The system of any of claims 10 to 12, comprising:
one or more gauge members 110a, 110b located against the stencil vacuum side 70b and configured for positioning the stencil 70 against the part first area 55.

14. The system of any of claims 10 to 13, wherein the stencil 70 and the part 50 are respective polycarbonate sheets.

15. The system of any of claims 10 to 14, wherein:
the stencil 70 defines a stencil aperture 70c formed by a stencil aperture edge 70d,
wherein the stencil aperture 70c is spaced apart from the vacuum port 85; and
the seal member 105 defines a seal member perimeter portion 105a positioned about a stencil perimeter boundary 81 and a seal member internal portion 105b positioned about the stencil aperture 70c.
